Europäisches Patentamt

European Patent Office

Office européen des brevets

(11) Numéro de publication: **0 358 554 B1**

(12) **FASCICULE DE BREVET EUROPEEN**

(45) Date de publication de fascicule du brevet: **19.01.94**

(21) Numéro de dépôt: **89402395.1**

(22) Date de dépôt: **01.09.89**

(51) Int. Cl.5: **A23L 1/308**, A61K 31/715, A61K 35/78, C08B 37/06

(54) **Produits riches en parois végétales à fraction hydrosoluble accrue, leur obtention, leur utilisation et compositions les contenant.**

(30) Priorité: **05.09.88 FR 8811601**

(43) Date de publication de la demande:
**14.03.90 Bulletin 90/11**

(45) Mention de la délivrance du brevet:
**19.01.94 Bulletin 94/03**

(84) Etats contractants désignés:
**AT BE CH DE ES FR GB GR IT LI LU NL SE**

(56) Documents cités:
**EP-A- 0 035 643**
**EP-A- 0 086 233**
**DE-A- 3 238 791**

(73) Titulaire: **INSTITUT NATIONAL DE LA RECHER-CHE AGRONOMIOUE (INRA)**
**147, rue de l'Université**
**F-75341 Paris Cédéx 07(FR)**

(72) Inventeur: **Thibault, Jean-François**
**2 rue de la Rotonde**
**F-44700 Orvault(FR)**
Inventeur: **Della Valle, Guy**
**31 rue José Maria de Hérédia**
**F-44300 Nantes(FR)**
Inventeur: **Ralet, Marie-Christine**
**26 rue de Strasbourg**
**F-44000 Nantes(FR)**

(74) Mandataire: **Phélip, Bruno et al**
**c/o Cabinet Harlé & Phélip**
**21, rue de La Rochefoucauld**
**F-75009 Paris (FR)**

Rank Xerox (UK) Business Services
(3.10/3.09/3.3.3)

EP 0 358 554 B1

## Description

La présente invention se rapporte aux produits riches en parois végétales, et elle concerne, de façon plus particulière, un traitement d'un nouveau type qui leur est appliqué et qui conduit à des produits modifiés par voie exclusivement physique. Ces produits modifiés, qui sont nouveaux par eux-mêmes, sont utiles comme fibres alimentaires. Ils peuvent toutefois être soumis directement à une extraction aqueuse, qui conduit elle aussi aux produits nouveaux, que sont, d'une part, les fractions hydrosolubles, et, d'autre part, les résidus d'extraction. Ces derniers constituent également des fibres alimentaires. Quant aux fractions hydrosolubles, leur nature varie selon les produits de départ. On peut en isoler les substances intéressantes que sont notamment les pectines, les carraghénanes, les alginates, les agaroses, l'agar, ces substances trouvant application pour leurs propriétés épaississantes et gélifiantes, en confiturerie, en confiserie et dans la préparation des plats cuisinés et des desserts lactés. Ces substances présentent, conformément à l'invention, des caractéristiques nouvelles les rendant plus particulièrement applicables dans certains cas, comme on le décrira ci-après.

Les produits riches en parois végétales sont, d'une manière générale, constitués par les sous-produits de l'industrie alimentaire et de l'agriculture, obtenus suivant d'énormes tonnages. Ils se composent essentiellement de polysaccharides: pectines, hémicellulose et cellulose, qui ont des propriétés fonctionnelles et/ou nutritionnelles, utilisées par l'industrie. Ainsi, ces produits sont des sources d'aliments pour les animaux, de produits fermentescibles, de fibres alimentaires, solubles ou non, à effets nutritionnels reconnus ou probables, de polysaccharides (pectines) utilisables industriellement comme additifs alimentaires, comme indiqué ci-dessus. La présente invention s'inscrit également dans le cadre de la valorisation de ces produits.

Les traitements qui leur sont appliqués à l'heure actuelle sont essentiellement d'ordre chimique, étant complétés par des procédés physiques classiques : séparation liquide/solide, broyage, etc.

A titre d'exemple, l'extraction des pectines à partir des sous-produits de l'industrie des jus de fruits (marcs de pomme, écorces d'agrumes), est en principe réalisée à chaud (60-80°C), par un acide minéral, à pH 1-2,5, pendant des temps pouvant aller jusqu'à plusieurs heures. Le rendement est généralement de 8 à 10% en poids de pectines par rapport à la matière sèche initiale. La solution contenant les pectines est séparée du résidu par des techniques de centrifugation et/ou de filtration. Ensuite, on neutralise cette solution, on la concentre, on précipite en milieu alcoolique et on récupère les pectines en poudre, directement utilisables.

Un premier inconvénient de ce procédé est qu'un traitement acide est souvent cause de pollution et de corrosion des cuves, avec l'inconvénient complémentaire que les résidus sont inexploitables, mis à part pour l'alimentation animale. Or, on sait que les résidus d'extraction des pectines, voire les produits initiaux, sont potentiellement des fibres alimentaires, utiles au plan nutritionnel.

De plus, s'agissant des pectines, on sait que celles-ci doivent être hautement méthylées (autrement dit posséder un degré de méthylation DM supérieur à 50%) et posséder une masse moléculaire suffisante, de sorte qu'elles pourront gélifier en présence de sucre et en milieu acide. Si l'on veut obtenir des pectines avec des degrés de méthylation plus bas, qui gélifieront en présence d'ions $Ca^{2+}$, en présence ou non de sucre, il faut alors effectuer une déméthylation en milieu acide et alcoolique des pectines déjà extraites. Le résidu d'extraction des pectines constitue à son tour un sous-produit destiné à l'alimentation animale. Il apparaît cependant que l'on ne peut actuellement pas obtenir de pectines ayant des DM supérieurs à 75%. De telles pectines pourraient s'avérer utiles dans certaines applications : on sait en effet que plus le DM est important, plus la vitesse de gélification est grande, et moins le pH doit être bas pour gélifier. Ainsi, de telles pectines seraient notamment applicables de façon nouvelle aux produits demandant une gélification ultra-rapide, et à la gélification de produits sucrés peu acides.

Par ailleurs, comme on vient de l'indiquer, les produits riches en parois végétales sont des sources de fibres alimentaires. Un regain d'intérêt pour les fibres alimentaires a incité l'industrie agro-alimentaire et l'industrie pharmaceutique à proposer des produits enrichis en fibres, destinés à être incorporés dans des produits à usage alimentaire ou médical. Les fibres alimentaires sont constituées principalement de cellulose, d'hémicelluloses, de substances pectiques et de lignine. On estime que la carence en fibres alimentaires serait à l'origine de maladies coliques (constipation, diverticulose) ou métaboliques (diabète, hypercholestérolémie, lithiase biliaire, obésité). Le pouvoir d'absorption d'eau des fibres augmente l'hydratation des selles, ce qui facilite le transit intestinal. Les régimes riches en fibres augmentent les pertes caloriques fécales et permettent d'obtenir un encombrement intestinal plus important pour un ingestat calorique moindre.

A l'heure actuelle, l'obtention de fibres alimentaires est réalisée par des technologies, telles que des fractionnements physiques pour le son de blé, ou par des broyages/lavages en milieu hydroalcoolique pour des fibres obtenues à partir de fruits ou légumes. Les fibres obtenues ont des propriétés qui sont fixées par la nature des produits de départ. Ainsi, elles présentent une faible hydrosolubilité. Il serait donc intéressant d'obtenir, à partir d'un même produit de départ, des fibres qui pourraient présenter une hydrosolubilité supérieure, et dont on pourrait également régler la solubilité et, en conséquence, la dégradabilité, de façon à pouvoir disposer de produits ayant un rapport fibres solubles/fibres insolubles adapté à chaque fois aux besoins nutritionnels, les fibres insolubles ayant plutôt un rôle mécanique direct sur le transit digestif, par rapport aux fibres solubles, qui auraient un rôle plutôt métabolique. De la même façon, il serait intéressant de pouvoir régler les propriétés d'absorption/rétention d'eau de ces fibres, dans la mesure où elles sont également utilisables comme éléments de charge ne visant pas d'apports de calories.

La demande de brevet EP-A-0086233 décrit un polysaccharide isolé à partir de plantes appartenant à l'espèce Epimedium de la famille des Berberidaceae, ledit polysaccharide ayant des propriétés d'agent anti-infectieux et immunostimulant. Le procédé de traitement de la plante en cause est uniquement destiné à isoler ledit polysaccharide spécifique. Il implique des étapes traditionnelles d'extraction par solvant, mais il ne comporte aucune opération de cisaillement-extrusion conduisant à un produit extrudé à faible teneur en eau, pouvant être directement utilisé dans diverses applications, par exemple dans des compositions alimentaires, en raison de sa teneur avantageuse en fibres.

La présente invention propose de nouveaux produits répondant aux besoins évoqués ci-dessus, ces nouveaux produits étant obtenus par un procédé nouveau, ne présentant plus aucun des inconvénients de la technique antérieure. Ainsi, l'invention propose en premier lieu, des produits riches en parois végétales, modifiés pour présenter une teneur en fraction hydrosoluble accrue; ces produits modifiés constituant des combinaisons intéressantes fibres solubles/fibres insolubles, ce qui ne peut pas être obtenu par le traitement acide classique qui sépare les deux fractions.

L'invention propose encore une solution pour faire varier de façon contrôlée le rapport des fibres solubles aux fibres insolubles de ces produits modifiés. Le procédé d'obtention de ces produits modifiés présente l'avantage de conduire directement à de tels produits, sans qu'il soit nécessaire de les sécher, ce procédé ne posant par ailleurs aucun problème de corrosion chimique ou de pollution, car le traitement par l'acide est supprimé. En outre, la modification des produits de départ étant exclusivement physique, et non chimique ou biotechnologique, les produits obtenus peuvent être qualifiés de naturels, ce qui représente également un intérêt au plan diététique et législatif.

De plus, une extraction aqueuse effectuée sur ces produits modifiés conduit à un extrait riche en polysaccharides solubles (pectines, carraghénanes, alginates, etc.), que l'on peut obtenir directement par précipitation par les agents classiques tels que des alcools comme l'éthanol ou l'isopropanol, ou par des sels multivalents comme les sels d'aluminium, autrement dit sans avoir recours à la phase de neutralisation du procédé classique. De plus, on obtient dans le produit selon l'invention des pectines ayant un degré de méthylation très élevé, jamais obtenu jusqu'ici.

L'extraction aqueuse conduit également à des résidus utilisables comme fibres alimentaires, avec un pouvoir d'absorption d'eau généralement accru.

La présente invention a donc d'abord pour objet un produit riche on parois végétales, modifié par une opération de cisaillement-extrusion pour renfermer une fraction de polysaccharides hydrosolubles supérieure à celle existant naturellement, sans modification de la composition chimique globale dudit produit. L'invention porte sur un produit modifié, tel qu'il vient d'être défini, dont la teneur en fraction de polysaccharides hydrosolubles est au moins égale à 1,5 fois et en particulier au double de cette teneur dans le produit naturel.

Ce produit modifié peut être issu de végétaux supérieurs naturellement riches en pectines, comme les marcs de pomme, les écorces d'agrumes et les pulpes de betterave, les algues, de son de blé, de pulpe de pomme de terre, de coques, comme les coques de tournesol, ou de résidus d'huilerie. Il peut se présenter sous la forme d'agrégats de dimensions réduites, tels que pastilles, granules, etc. ou bien sous une forme pulvérulente. Sa teneur en eau est généralement inférieure à 12% en poids sur une base humide.

La présente invention a également pour objet un procédé de fabrication du produit tel que défini ci-dessus, caractérisé par le fait qu'on utilise un produit de départ riche en parois végétales à l'état divisé, qu'on ajoute de l'eau si nécessaire audit produit à l'état divisé, pour obtenir un mélange apte à subir le traitement de cisaillement ultérieur, et qu'on soumet le produit éventuellement additionné d'eau à un effort de cisaillement avant extrusion, pour obtenir les produits recherchés sous forme d'agrégats de dimensions réduites, lesquels sont, le cas échéant, soumis à un broyage pour obtenir le produit recherché sous une forme pulvérulente.

On obtient ainsi des produits modifiés dont la partie soluble peut être accrue d'un facteur important, sans que la composition chimique globale ait été changée. Ces valeurs peuvent, dans certains cas

EP 0 358 554 B1

dépasser celles obtenues avec les traitements acides correspondants de la technique antérieure.

De plus, les produits modifiés obtenus ont une couleur plus claire que les produits initiaux, et ils ne nécessitent aucun séchage vu leur faible teneur en eau après extrusion. Ils peuvent subir une mise en forme selon la géométrie de la filière de l'appareil d'extrusion. On peut également les broyer après extrusion de façon à obtenir des poudres de granulométrie déterminée.

La capacité d'absorption d'eau de ces produits modifiés n'est généralement pas changée après le procédé d'extrusion malgré le fort pourcentage de produit soluble. Elle est augmentée dans certains cas, comme celui de la pomme.

Par ailleurs, on a, dans la plupart des cas, constaté que la quantité de fraction hydrosoluble que l'on peut obtenir augmente linéairement avec l'énergie délivrée au produit pour assurer le cisaillement, indépendamment de la température. Ceci n'était pas évident et permet de régler le rapport fibres solubles/fibres insolubles des produits modifiés.

On utilise généralement un produit de départ ayant une teneur en matières sèches d'au moins environ 70% en poids sur une base humide. Par ailleurs, on ajoutera, la plupart du temps, de l'eau au produit de départ, notamment à raison de 10 à 30% en poids par rapport au produit tel quel, la quantité d'eau ajoutée étant fonction de la teneur en eau du produit de départ et de l'intensité du traitement à effectuer.

Ce produit de départ est broyé, si nécessaire, pour avoir une granulométrie par exemple, de l'ordre du millimètre. On applique un gradient de cisaillement généralement compris entre 100 et 800 s$^{-1}$, ce qui peut être obtenu grâce à un extrudeur bi-vis, pour une vitesse de rotation comprise entre environ 100 et 300 tours par minute.

On peut éventuellement apporter de la chaleur au produit dans la zone de cisaillement, en complément de celle engendrée par ledit cisaillement.

Ce procédé de cisaillement-extrusion peut être conduit dans un extrudeur à double vis classique, comportant une zone d'alimentation recevant, d'une part, le produit de départ à l'état divisé, et, d'outre part, l'eau, le mélange et le transport s'effectuant dans une zone de transport faisant suite à ladite zone d'alimentation, la zone de transport étant, quant à elle, suivie d'une zone de cisaillement, dans laquelle les vis sont avantageusement à pas inversé (contre-filet) et sont munies de fuites permettant le passage de la matière. La sortie du produit modifié s'effectue alors par deux filières de configuration classique.

Le produit extrudé ayant subi le traitement de cisaillement-extrusion précité peut être soumis directement à une extraction aqueuse. permettant de récupérer, d'une part, un résidu insoluble, et, d'autre part, les polysaccharides solubilisés. Dans le cas de produits de départ riches en pectines, on isole les pectines par précipitation par les techniques classiques, notamment en milieu alcoolique.

Ces pectines présentent un degré de méthylation supérieur à 75%, et, notamment, de 80 à 90%. Elles peuvent également être caractérisées par une teneur accrue, par rapport aux pectines obtenues par voie classique, en arabinose, de l'ordre de 50 à 100%.

Quant aux résidus d'extraction aqueuse, ils peuvent être caractérisés par un pouvoir d'absorption d'eau supérieur à environ 20g d'eau par gramme de produit sec.

La présente invention porte également sur l'utilisation, comme fibres alimentaires, en industrie alimentaire, pharmaceutique et diététique, des produits modifiés tels qu'obtenus par le procédé de cisaillement-extrusion, et des résidus d'extraction aqueuse, tels que définis ci-dessus. L'invention porte également sur des compositions alimentaires, pharmaceutiques ou diététiques renfermant de telles fibres.

Pour mieux illustrer le procédé de la présente invention, on décrira plus en détail ci-après un appareillage pour la mise en oeuvre du procédé de cisaillement-extrusion de l'invention en référence aux dessins annexés sur lesquels:

Fig. 1 est une vue schématique, en coupe axiale longitudinale, d'un extrudeur utilisable selon l'invention,

Fig. 2 est une vue schématique, partiellement en coupe axiale longitudinale, partiellement en élévation, d'un autre extrudeur à double vis pouvant être utilisé dans la mise en oeuvre de l'invention.

Fig. 3 est un diagramme illustrant les résultats de l'invention dans un exemple concret.

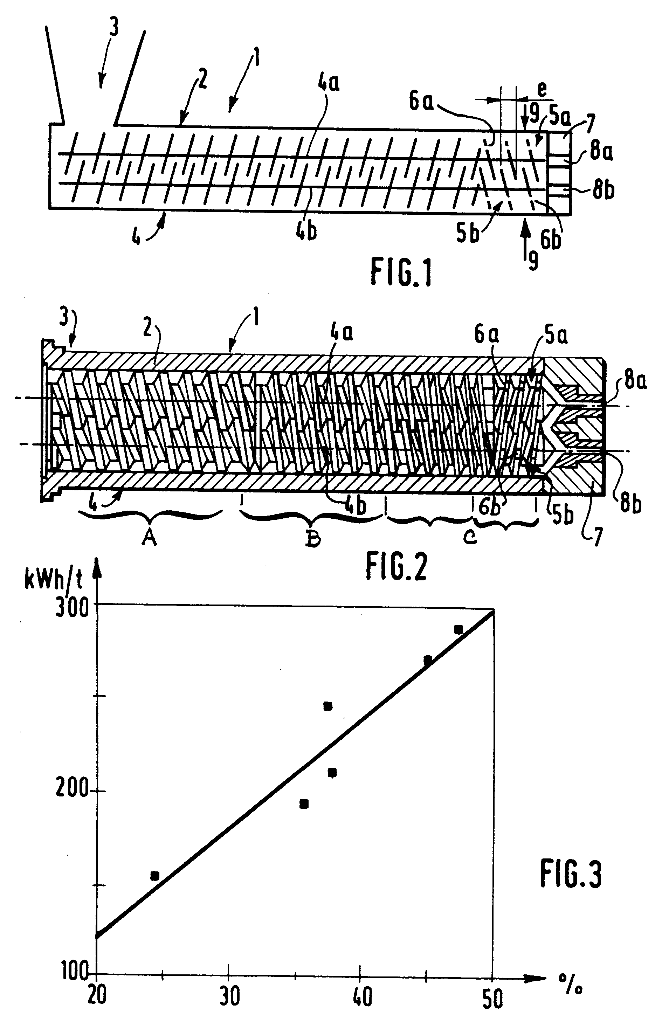

La Figure 1 du dessin annexé, représente, de façon schématique, un extrudeur à double vis utilisable pour la mise en oeuvre du procédé de cisaillement-extrusion de l'invention. Cet extrudeur 1 comporte un fourreau externe cylindrique 2, disposé horizontalement. Dans une région d'extrémité du fourreau 2, sont disposées une trémie 3 d'alimentation en produit solide, et une entrée d'eau symbolisée en 4. A l'intérieur du fourreau 2, sont disposées deux vis corotatives copénétrantes 4a, 4b, qui sont destinées à diriger le mélange produit-eau, à partir de la zone d'alimentation, et par une zone centrale de transport, à une zone de cisaillement, dans laquelle le pas des vis s'inverse en 5a, 5b. Ces éléments de vis à pas inversé 5a, 5b sont munis de fuites respectivement 6a, 6b, pour permettre le passage du produit. En aval de la zone de cisaillement, est constituée une zone 7, comportant deux filières cylindriques respectivement 8a, 8b. On a par ailleurs symbolisé en 9 un apport éventuel de chaleur.

4

L'extrudeur de la figure 2 diffère de celui de la figure 1 par le fait qu'il possède des zones successives d'alimentation (A) et de transport (B et C), à pas de vis de plus en plus faibles.

Pour mieux illustrer les produits de la présente invention, on en décrira plus en détail ci-après plusiers formes de réalisation. Les Exemples 1a à 1d, 2a à 2d et 3a à 3f sont des exemples de l'invention. La figure 3 du dessin annexé est associée aux Exemples 3a à 3f. Ont été utilisées, pour la mesure de l'absorption d'eau, la méthode décrite dans l'article intitulé "Structure and Properties of Sugar Beet Fibres", C. Bertin, X. Rouau, et J.F. Thibault, J. Sci. Food Agric. (1988) Tome 44, pages 15-29 ; et pour la caractérisation des pectines (Tableau 4), les méthodes décrites dans l'article intitulé "Characterisation and Oxydative Crosslinking of Sugar Beet Pectines extracted from Cossettes and Pulps under different conditions", J.F. Thibault, Carbohydrate Polymers (1988) n°8, Pages 209-223.

EXEMPLE DE REFERENCE 1 et EXEMPLES 1a à 1d :

TRAITEMENT DE MARCS DE POMME

On utilise des marcs de pomme dont la teneur en matières sèches est de 89,3% en poids. On réalise leur broyage à l'aide d'un broyeur à marteaux Rousselle (vitesse linéaire : 100 m/s), muni d'une grille de 2 mm. Le produit obtenu est le produit conforme à l'Exemple de Référence 1.

On conduit ensuite le traitement de cisaillement-extrusion de l'invention, en ajoutant au produit de l'Exemple de Référence 1, à chaque fois une quantité d'eau telle qu'indiquée dans le Tableau 1, exprimée en pourcentage par rapport au poids tel quel du produit initial, puis en conduisant le traitement proprement dit, en faisant varier certains paramètres également comme indiqué dans le Tableau 1, dans un appareil cuiseur-extrudeur Clextral BC45, du type de celui décrit en référence avec la figures 2 avec les caractéristiques principales suivantes :

La longueur totale du fourreau 2 est d'environ 1 mètre, l'entraxe entre les deux vis 4a, 4b de 45 mm, et les filières cylindriques 8a, 8b présentent un rayon de 2 mm et une longueur de 30 mm. L'écartement e entre les vis est de 1 mm, ou moins.

La température indiquée dans le Tableau 1 est celle du fourreau 2 avant la zone des filières 7, et le nombre de tours par minute se rapporte à la vitesse de rotation des vis (4a, 4b), exprimant le taux de remplissage de celles-ci pour un débit constant. Les intensités des traitements conformes aux Exemples 1a à 1d ont été évaluées par la mesure de l'énergie mécanique fournie par le moteur principal (E, exprimée en kWh/t).

On a ensuite mesuré, pour le produit de l'Exemple de Référence 1 et ceux des Exemples 1a à 1d,
- le pourcentage de matières insolubles dans l'eau ;
- le pourcentage des matières solubles dans l'eau ; et
- l'absorption d'eau.

On a conduit une extraction aqueuse de façon classique, en utilisant 1 gramme de produit extrudé dans 3 fois 100 ml d'eau. La séparation est réalisée par centrifugation.

Les chromatographies par perméation de gel (GPC) sur gel de Sepharose CL2B effectuées sur l'extrait aqueux ont montré deux populations : l'une de masse moléculaire importante, composée essentiellement d'acides galacturoniques, et l'autre, de masse moléculaire plus faible, constituée principalement d'oses neutres. Les pectines ont été ensuite précipitées de l'extrait aqueux en milieu alcoolique (80% en volume d'éthanol dans le mélange final), ce qui permet d'éliminer au moins en partie la population de plus faible masse moléculaire. Dans le Tableau 1, sont rapportés également :
- la teneur en acides galacturoniques (AAG) et la teneur en oses neutres (ON), toutes deux calculées en pourcentages du produit initial ; et
- le pourcentage du produit initial précipitable par l'éthanol à 80% (Exemple 1b).

L'ensemble des résultats obtenus est rapporté dans le Tableau 1.

EXEMPLE COMPARATIF 1 :

Après avoir réalisé le même broyage qu'à l'Exemple 1, sur le même produit de départ, on réalise un traitement classique d'extraction des pectines : 5 g de produit extrait par trois fois 150 ml d'HCl 0,05N, à 85°C, pendant 3 x 30 minutes. On a conduit sur ce produit les mêmes mesures que pour les Exemples de Référence 1 et les Exemples 1a à 1d, les résultats étant également rapportés dans le Tableau 1.

Tableau 1 :

| Exemple | Traitement après broyage | | | Insolubles dans l'eau (%) | Solubles dans l'eau | | | | Absorption d'eau (ml/g) | |
|---|---|---|---|---|---|---|---|---|---|---|
| | % eau ajoutée | Tours/mn | E (kWh/t) | | (%) | %AAG | %ON | %préci- pitables | avant extraction aqueuse | après extraction aqueuse * |
| Réf. 1 | Néant | | | 78,4 | 21,6 | 1,5 | 7,3 | | 8,1 | 9,5 |
| 1a | Cisaillement-extrusion à 100°C | 20 | 150 | 156,9 | 63,5 | 5,4 | 10,9 | | 18,1 | 22,3 |
| 1b | | 20 | 250 | 230,4 | 60 | 7,4 | 12,1 | 12,1 | 16,5 | 22,2 |
| 1c | | 10 | 250 | 265,8 | 48,7 | 51,3 | 9,5 | 16,6 | | 13,1 | 22,3 |
| 1d | | 30 | 250 | 175,6 | 66,9 | 33,1 | 5 | 10,1 | | 17,6 | 21,4 |
| Comp. 1 | Extraction acide | | | 59,6 | 40,4 | 9,3 | 16,2 | 13,7 | 13,7 | |

* Ce paramètre est discuté à l'Exemple 4

Si l'on examine le Tableau 1, on constate que la solubilité dans l'eau des produits des Exemples 1a à 1d est supérieure à celle du produit de référence 1. Cette solubilité augmente avec une augmentation de la vitesse de rotation des vis et avec une diminution de la quantité d'eau ajoutée, en d'autres termes, avec l'augmentation de l'énergie mécanique fournie par le moteur principal de l'extrudeuse.

Le traitement acide de l'Exemple Comparatif 1 permet de solubiliser environ 40% du poids des marcs de pomme. Le traitement de cisaillement-extrusion permet d'obtenir une solubilisation égale, voire de la dépasser (Exemple 1c).

La capacité d'absorption d'eau de ces produits augmente de façon importante (de l'ordre du double) après le traitement de cisaillement-extrusion de l'invention (sans extraction aqueuse).

La composition en AAG et en ON totaux montre que les matières solubles sont enrichies en polysaccharides par rapport au produit de référence. Ces résultats sont comparables à ceux obtenus dans le cas de l'Exemple Comparatif 1 (extraction acide des pectines), ce qui montre l'efficacité du traitement de cisaillement-extrusion de l'invention pour augmenter la fraction polysaccharidique (ou de fibres) hydrosoluble.

On a en outre mesuré pour le produit de l'Exemple de référence 1 et celui de l'Exemple 1b, le pourcentage de fibres totales, solubles et insolubles.

Le dosage a été effectué selon la méthode de Prosky et al., (Journal of Association of Official Analytical Chemistry, Vol. 71, n° 5, 1988).

Si l'on examine le Tableau 1bis on constate que la teneur en fibres totales du produit de l'Exemple 1b est identique à celle du produit de référence 1 (70-71%). La teneur en fibres solubles du produit de l'Exemple 1b est très supérieure à celle du produit de référence 1. Ces résultats montrent que la fraction fibres solubles est accrue sans qu'il y ait modification de la teneur en fibres totales.

TABLEAU 1bis

| Exemple | Traitement après broyage | | | | | % Fibres totales | % Fibres insolubles | % Fibres solubles |
|---|---|---|---|---|---|---|---|---|
| | | % eau ajoutée | Temp. (°C) | Tours/mn | E (kWh/t) | | | |
| Réf. 1 | Néant | | | | | 70 | 57,5 | 12,5 |
| 1b | Cisaillement - extrusion | 20 | 100 | 250 | 230,4 | 71 | 47 | 24 |

En ce qui concerne la fraction précipitable, elle est obtenue avec un rendement de 12%, ce qui est comparable avec le pourcentage obtenu dans le cas de l'extraction acide, montrant également l'efficacité du procédé de l'invention.

Les pectines, dont on a indiqué qu'elles étaient obtenues avec des rendements similaires à ceux de l'extraction acide, ont été étudiées plus précisément, leurs caractéristiques étant indiquées dans le Tableau

7

4.

On constate, en examinant le Tableau 4, que les pectines de pomme, obtenues après cisaillement-extrusion, ont une masse moléculaire plus importante que celles obtenues par voie acide. Les pectines obtenues selon l'invention ont des teneurs plus importantes en acides galacturoniques, et des degrés de méthylation et d'acétylation plus forts que ceux obtenus dans le cas de l'extraction acide.

Il y a lieu de souligner que le degré de méthylation obtenu est très élevé, puisqu'il est de 90%. Cette valeur n'a jamais été obtenue par extraction acide, car les fonctions esters sont hydrolysables dans un tel milieu, d'où des degrés de méthylation limités à 70%. Ceci confère aux pectines de pomme ainsi obtenues des caractéristiques de gélification différentes de celles obtenues par voie acide, car une augmentation du degré de méthylation diminue le temps de gélification et augmente le pH de gélification. Ainsi, avec les pectines contenues dans le produit selon l'invention, on n'a pu obtenir de vrais gels (gels homogènes) dans les conditions classiques de gélification des pectines hautement méthylées (pH = 2,4; 90°C; 65% de saccharose), mais plutôt des pré-gels ou des gels hétérogènes, ces phénomènes étant dos à des gélifications trop rapides à ce pH. Quand Le pH est porté à 3, de vrais gels sonts obtenus pour des concentrations de 1,8% en pectines de l'invention.

EXEMPLE DE REFERENCE 2 et EXEMPLES 2a à 2d, EXEMPLE COMPARATIF 2:

TRAITEMENT D'ECORCES DE CITRUS

On a procédé de la même façon que dans le cas des marcs de pomme, et on a présenté les résultats de la même façon. La teneur en matières sèches des produits initiaux était de 89,8% en poids.

Les mêmes remarques que précédemment peuvent être fournies, le traitement acide solubilisant environ 50% du poids des écorces de citrus, valeur qui est dépassée dans le cas du traitement de cisaillement-extrusion de l'invention. On peut donc obtenir par le procédé de l'invention des écorces de citrus traitées, dont la partie soluble a été accrue d'un facteur de deux à trois sans que la composition chimique globale ait été changée.

En ce qui concerne la capacité d'aborption d'eau, les résultats montrent que les valeurs ne sont pas modifiées, et qu'elles sont même légèrement augmentées, après le traitement de cisaillement-extrusion de l'invention.

Concernant le pourcentage de précipitables par l'éthanol à 80%, on constate que l'on peut obtenir des pectines avec un rendement de l'ordre de 25%, d'égale importance à celui obtenu par extraction acide.

Si l'on se rapporte maintenant au Tableau 4, on constate que la masse moléculaire est inférieure de moitié à celle du produit extrait par voie acide et que les pectines obtenues ont des teneurs plus importantes en acides galacturoniques, et un degré de méthylation et un degré d'acétylation plus forts que ceux obtenus dans le cas de l'extraction acide. Ce degré de méthylation est également remarquable puisqu'il est de l'ordre de 85%. Des gels ont été obtenus dans les mêmes conditions que précédemment.

On a procédé de la même façon que dans le cas des marcs de pomme (Exemple 1), en mesurant le pourcentage de fibres totales, solubles et insolubles. Les résultats sont rassemblés aux Tableaux 2bis et 2ter. Si l'on se rapporte au Tableau 2bis les mêmes remarques que précédemment peuvent être formulées, à savoir que le traitement de cuisson-extrusion conduit à une augmentation importante de la teneur en fibres solubles sans modification de la teneur en fibres totales.

Si l'on se rapporte au Tableau 2ter, on constate que le pourcentage de précipitables par l'éthanol à 80% (17,9-33,2) est d'autant plus élevé que le traitement d'extrusion a été plus fort.

La masse moléculaire décroît quand la sévérité du traitement augmente. Toutes les pectines obtenues par extrusion ont des teneurs en acides galacturoniques, des degrés de méthylation et des degrés d'acétylation plus élevés que ceux de l'Exemple comparatif 2. Les teneurs en oses neutres sont significativement plus élevées. On observe une augmentation des teneurs en rhamnose, en arabinose (produit de l'Exemple 2c mis à part) et en galactose et une diminution de la teneur en acides galacturoniques en fonction de la sévérité du traitement.

EP 0 358 554 B1

Tableau 2 :

| Exemple | Traitement après broyage | | | Insolubles dans l'eau (%) | Solubles dans l'eau | | | | Absorption d'eau (ml/g) | |
|---|---|---|---|---|---|---|---|---|---|---|
| | | | | | (%) | %AAG | %ON | %préci-pitables | avant extraction aqueuse | après extraction aqueuse * |
| Réf. 2 | Néant | | | 79,7 | 20,3 | 2,5 | 4,7 | | 14,5 | 27,2 |
| | Cisaillement-extrusion à 100°C | | | | | | | | | |
| | % eau ajoutée | Tours/mn | E (kWh/t) | | | | | | | |
| 2a | 20 | 150 | 167 | 54,1 | 45,9 | 14,6 | 12,1 | | 15,4 | 28,8 |
| 2b | 20 | 250 | 227,2 | 54,1 | 45,9 | 17,9 | 11,8 | 24,7 | 18,3 | 28,7 |
| 2c | 10 | 250 | 300,5 | 40 | 60 | 22,4 | 12,6 | | 13,6 | 27,3 |
| 2d | 30 | 250 | 188,3 | 64,8 | 35,9 | 12,9 | 8,7 | | 15,8 | 22,3 |
| Comp. 2 | Extraction acide | | | 49,6 | 50,4 | 22,9 | 13,2 | 24,8 | 15,9 | |

\* Ce paramètre est discuté à l'Exemple 4

TABLEAU 2bis

| Exemple | Traitement après broyage | | | | % Fibres totales | % Fibres insolubles | % Fibres solubles |
|---|---|---|---|---|---|---|---|
| Réf. 2 | Néant | | | | 86,1 | 54,4 | 31,7 |
| | Cisaillement - extrusion | | | | | | |
| | % eau ajoutée | Temp. ( °C) | Tours/ mn | E (kWh/t) | | | |
| 2b | 20 | 100 | 250 | 227,2 | 87,2 | 33,5 | 53,7 |

EP 0 358 554 B1

TABLEAU 2ter

| Traitement de l'exemple | 2a + extraction aqueuse | 2b + extraction aqueuse | 2c + extraction aqueuse | 2d + extraction aqueuse | Comp. 2 |
|---|---|---|---|---|---|
| Rendement | 27,2 | 24,7 | 33,1 | 17,9 | 24,8 |
| Viscosité intrinsèque (ml/g) | 166 | 220 | 62 | 330 | 546 |
| Masse moléculaire | 34100 | 42100 | 16350 | 57000 | 82900 |
| Degré de méthylation | 76,5 | 84,9 | 80,9 | 79,2 | 72,1 |
| Degré d'acétylation | 5 | 4,7 | 7,3 | 4,1 | 2,2 |
| Teneur en acides galacturoniques | 69,3 | 69,6 | 65,1 | 71,7 | 61,5 |
| Teneur en oses neutres | 16,2 | 11,8 | 15,5 | 11,7 | 8,8 |
| dont : | | | | | |
| - rhamnose | 0,9 | 0,7 | 1,1 | 0,6 | 0,7 |
| - arabinose | 7,8 | 5,6 | 4,5 | 4,8 | 5 |
| - xylose | 0,8 | 0,7 | 0,8 | 0,8 | 0,1 |
| - mannose | 1,2 | 0,7 | 1,4 | 1,3 | 0 |
| - galactose | 4,2 | 2,8 | 6,3 | 2,7 | 2,4 |
| - glucose | 1,3 | 1,3 | 1,4 | 1,5 | 0,6 |

EXEMPLE DE REFERENCE 3, EXEMPLES 3a à 3f et EXEMPLE COMPARATIF 3:

TRAITEMENT DES PULPES DE BETTERAVES

On a procédé de la même façon que précédemment et on a présenté les résultats de la même façon (Tableau 3). La teneur en matières sèches des produits initiaux était de 90,6% en poids. Les mêmes remarques que précédemment peuvent être formulées. On a par ailleurs présenté, en Figure 3, la courbe obtenue en portant en abscisses, le pourcentage de fibres solubles, et en ordonnées, l'énergie fournie par le moteur principal de l'extrudeuse, qui montre une bonne corrélation entre ces deux grandeurs (coefficient de corrélation: 0,94).

On a encore mesuré le pourcentage de fibres totales solubles et insolubles, comme dans les autres Exemples. Les résultats sont rassemblés dans le Tableau 3bis.

Les mêmes remarques que précédemment peuvent être formulées. Pour le produit de l'Exemple 3e, la fraction fibres solubles est fortement accrue sans qu'il y ait modification de la teneur en fibres totales. Pour le produit de l'Exemple 3b, le traitement appliqué étant sévère, on observe une légère perte en fibres totales.

EP 0 358 554 B1

## Tableau 3

| Exemple | Traitement après broyage | | | | Insolubles dans l'eau (%) | Solubles dans l'eau | | | | Absorption d'eau (ml/g) | |
|---|---|---|---|---|---|---|---|---|---|---|---|
| | | | | | | (%) | %AAG | %ON | %précipitables | avant extraction aqueuse | après extraction aqueuse * |
| Réf. 3 | Néant | | | | 83,4 | 16,6 | 0,7 | 6,1 | | 19,3 | 24,7 |
| | Cisaillement-extrusion | | | | | | | | | | |
| | % eau ajoutée | Temp. (°C) | Tours/mn | E (kWh/t) | | | | | | | |
| 3a | 20 | 100 | 150 | 211,2 | 62,1 | 37,9 | 11,4 | 10,4 | | 19,8 | 27,3 |
| 3b | 20 | 100 | 250 | 270,7 | 54,8 | 45,2 | 14,5 | 13,3 | 22,2 | 14,4 | 28,8 |
| 3c | 30 | 100 | 250 | 245,9 | 62,5 | 37,5 | 9,8 | 7,8 | | 18,9 | 26,2 |
| 3d | 30 | 100 | 150 | 154,6 | 75,6 | 24,4 | 4,8 | 6,4 | | 17,1 | 22,6 |
| 3e | 30 | 180 | 150 | 193,8 | 64,3 | 35,7 | 8,9 | 9,6 | | 18,7 | 26,1 |
| 3f | 20 | 180 | 250 | 287,3 | 52,5 | 47,5 | 13 | 15,1 | | 13,4 | 21,9 |
| Comp. 3 | Extraction acide | | | | 50,5 | 49,5 | 10,9 | 14,7 | 18,6 | 28,8 | |

\* Ce paramètre est discuté à l'Exemple 4

TABLEAU 3bis

| Exemple | Traitement après broyage | | | | % Fibres totales | % Fibres insolubles | % Fibres solubles |
|---|---|---|---|---|---|---|---|
| Réf. 3 | Néant | | | | 72,5 | 62,4 | 10,3 |
| | Cisaillement - extrusion | | | | | | |
| | % eau ajoutée | Temp. ( °C) | Tours/ mn | E (kWh/t) | | | |
| 3b | 20 | 100 | 250 | 270,7 | 67,5 | 38,5 | 29 |
| 3e | 30 | 180 | 150 | 193,8 | 72,8 | 47,8 | 25 |

EP 0 358 554 B1

## Tableau 4

| Traitement de l'Exemple | 1b + extraction aqueuse | Comp. 1 | 2b + extraction aqueuse | Comp. 2 | 3b + extraction aqueuse | Comp. 3 |
|---|---|---|---|---|---|---|
| Viscosité intrinsèque (ml/g) | 240 | 166 | 220 | 546 | 110 | 310 |
| Masse moléculaire | 44 900 | 34 000 | 42 100 | 82 900 | 25 100 | 54 400 |
| Degré de méthylation | 90 | 74,1 | 84,9 | 72,1 | 78,5 | 75,4 |
| Degré d'acétylation | 7,1 | .6 | 4,7 | 2,2 | 39,1 | 30,7 |
| Teneur en acides galacturoniques | 54,4 | 34,2 | 69,6 | 61,5 | 45,3 | 41,2 |
| Teneur en oses neutres dont : | 21,5 | 12,4 | 11,7 | 8,9 | 17,3 | 12,0 |
| - rhamnose | 0,8 | 0,7 | 0,7 | 0,7 | 1,4 | 1,2 |
| - arabinose | 6,5 | 3,8 | 5,6 | 5,0 | 10,5 | 4,9 |
| - xylose | 0,7 | 0,8 | 0,7 | 0,1 | 0,2 | 0,1 |
| - mannose | 0,3 | 0,0 | 0,7 | 0,0 | 0,2 | 0,1 |
| - galactose | 2,6 | 4,1 | 2,8 | 2,4 | 2,8 | 2,8 |
| - glucose | 10,7 | 3,4 | 1,3 | 0,6 | 2,3 | 2,9 |
| Acide férulique | 1,0 | 0,9 | – | – | – | – |

Le Tableau 5 indique la composition glucidique (% en poids sec) des produits de départ, des résidus de l'extraction aqueuse conduite sur les produits extrudés, et des produits constitués par les résidus de l'extraction aqueuse conduite sur les produits extrudés, et des produits constitués par les résidus de l'extraction acide classique.

Tableau 5

| Traitement de l'Exemple | Réf1 | Réf1 | 1a | 1b | 1c | 1d | Comp1 |
|---|---|---|---|---|---|---|---|
| | | + extraction aqueuse | | | | | |
| Rhamnose | 1 | 1,4 | 1,4 | 1,2 | 1,7 | 1,8 | 2,1 |
| Arabinose | 6 | 5,2 | 6,1 | 4,1 | 2,5 | 6 | 2 |
| Xylose | 3,5 | 3,1 | 5,1 | 4,7 | 7,6 | 5,1 | 8,3 |
| Mannose | 2 | 1,2 | 2,1 | 1,9 | 1,8 | 1,8 | 2,5 |
| Galactose | 4,3 | 4,2 | 6,1 | 5,1 | 3,8 | 5,6 | 5,4 |
| Glucose | 17 | 14,2 | 20,7 | 19,2 | 18,9 | 17 | 17 |
| Acides galacturoniques | 13,8 | 13,7 | 13,1 | 10,9 | 5,5 | 12,6 | 11,8 |
| Total | 47,6 | 43 | 54,6 | 47,1 | 41,8 | 49,9 | 49,1 |

| Traitement de l'Exemple | Réf2 | Réf2 | 2a | 2b | 2c | 2d | Comp2 |
|---|---|---|---|---|---|---|---|
| | | + extraction aqueuse | | | | | |
| Rhamnose | 1,5 | 1,7 | 2,1 | 1,9 | 1 | 1,4 | 2,8 |
| Arabinose | 7 | 8,6 | 7 | 7,3 | 2,4 | 8,1 | 2,3 |
| Xylose | 2,5 | 3,2 | 4,8 | 4,3 | 4,3 | 3,1 | 5,5 |
| Mannose | 2,9 | 2,8 | 3,8 | 3,4 | 3,2 | 2,7 | 4,3 |
| Galactose | 5,4 | 6,1 | 7,2 | 6,7 | 4,3 | 6,5 | -6,6 |
| Glucose | 12,4 | 10,3 | 15,7 | 13,4 | 15,7 | 11,5 | 17,9 |
| Acides galacturoniques | 29,2 | 30,3 | 21,2 | 19,9 | 13 | 25 | 22,5 |
| Total | 60,9 | 63 | 61,8 | 56,9 | 43,9 | 58,3 | 61,9 |

| Traitement de l'Exemple | Réf3 | Réf3 | 3a | 3b | 3c | 3d | 3e | 3f | Comp3 |
|---|---|---|---|---|---|---|---|---|---|
| | | | + extraction aqueuse | | | | | | |
| Rhamnose | 1,7 | 0,8 | 0,9 | 0,9 | 1,3 | 1,6 | 0,8 | 0,8 | 2,4 |
| Arabinose | 10,7 | 9,8 | 8,9 | 8,4 | 7,4 | 8,9 | 8,3 | 7 | 6,3 |
| Xylose | 0,6 | 0,5 | 0,6 | 0,7 | 0,5 | 0,5 | 0,5 | 0,9 | 3 |
| Mannose | 0,9 | 0,6 | 0,7 | 0,8 | 0,7 | 0,6 | 0,5 | 0,7 | 2 |
| Galactose | 4,1 | 3,1 | 3,3 | 3,1 | 3,3 | 3,2 | 3 | 2,8 | 5,1 |
| Glucose | 26,4 | 14,4 | 21,6 | 23,2 | 22,2 | 18,1 | 17,3 | 25,5 | 15 |
| Acides galacturoniques | 17,9 | 15,2 | 9 | 7,9 | 11 | 13,3 | 12,2 | 7,2 | 15,1 |
| Total | 62,3 | 44,4 | 45 | 45 | 46,4 | 46,2 | 42,6 | 44,9 | 48,9 |

Les résultats montrent qu'à part un appauvrissement en acides galacturoniques et un enrichissement éventuel en glucose (d'origine cellulosique), ces résidus ont des compositions globales proches des produits initiaux. Leur teneur totale en polysaccharides est en général aussi élevée que celle des produits initiaux. Des fibres alimentaires peuvent être obtenues à partir de ces produits après séchage et broyage. Par ailleurs, le procédé améliore de façon significative la couleur des produits obtenus.

Les propriétés d'absorption ont été indiquées à chaque fois, respectivement, dans les Tableaux 1 à 3, pour la pomme, le citrus et la betterave. Les valeurs obtenues pour ces fibres sont généralement plus importantes que celles des produits initiaux, avant ou après extrusion, ou que celles des résidus d'extraction acide.

EXEMPLE DE REFERENCE 4 ET EXEMPLES 4a à 4d:

TRAITEMENT DU SON DE BLE

On utilise un son de blé commercial de granulométrie inférieure ou égale à 2 mm et dont la teneur en matières sèches est de 87,3% en poids. Ce produit est le produit conforme à l'Exemple de référence 4.

On conduit ensuite le traitement de cisaillement-extrusion de l'invention en procédant de la même façon que dans le cas des marcs de pomme (Exemple 1).

Si l'on se rapporte au Tableau 6, on constate que le traitement de cisaillement-extrusion le plus sévère induit une solubilisation d'environ 40% du poids du son de blé. On peut donc obtenir par le procédé de l'invention des sons de blé traités dont la fraction hydrosoluble a été accrue d'un facteur proche de 2 sans que la composition chimique globale ait été changée.

En ce qui concerne la capacité d'absorption d'eau, les résultats montrent que les valeurs sont accrues dans le cas des produits des Exemples 4a à 4c et légèrement diminuées dans le cas du produit de l'Exemple 4d.

Si l'on examine le Tableau 7, on constate que la teneur en fibres solubles est accrue jusqu'à un facteur de 1,7 sans qu'il y ait modification de la teneur en fibres totales. Dans le cas du produit de l'Exemple 4d, le traitement appliqué étant particulièrement sévère, on observe une légère perte en fibres totales.

La composition en oses neutres montre que les matières solubles sont enrichies en polysaccharides par rapport au produit de référence 4.

Les fibres solubles ont été étudiées plus précisément. Si l'on se réfère au Tableau 8, on cosntate que les teneurs en xylose, arabinose et glucose sont accrues. Les chromatographies de perméation sur gel de Séphacryl-S-200 effectuées sur les fibres solubles ont montré trois populations: les deux premières, de masse moléculaire importante, composée essentiellement d'arabinoxylanes, et l'autre de masse moléculaire plus faible composée essentiellement de glucose.

Le Tableau 9 indique la composition glucidique (% en poids sec du produit de référence) des produits de référence et des résidus d'extraction aqueuse.

Les résultats montrent qu'à part un appauvrissement en arabinose et en xylose, ces résidus ont des compositions globales proches du produit de référence.

Les propriétés d'absorption d'eau ont été indiquées dans le Tableau 6. Les valeurs obtenues sont plus importantes que celles des produits initiaux avant ou après extrusion.

## TABLEAU 6

| Exemple | Traitement après broyage | | | | Insolubles dans l'eau (%) | Solubles dans l'eau | | Absorption d'eau (ml/g) | |
|---|---|---|---|---|---|---|---|---|---|
| | | | | | | (%) | %ON | avant extraction aqueuse | après extraction aqueuse |
| Réf. 4 | Néant | | | | 75,7 | 24,3 | 10,7 | 2,7 | 4,1 |
| | Cisaillement - extrusion | | | | | | | | |
| | % eau ajoutée | Temp. ( °C) | Tours/ mn | E (kWh/t) | | | | | |
| 4a | 17,5 | 100 | 250 | 230 | 77,1 | 22,9 | 13 | 3,8 | 4,4 |
| 4b | 8,7 | 100 | 250 | 300 | 68,3 | 31,7 | 18,7 | 3 | 4,9 |
| 4c | 11,3 | 100 | 240 | 310 | 67,4 | 32,6 | 21,2 | 3,4 | 4,8 |
| 4d | 6,1 | 100 | 240 | 380 | 59,9 | 40,1 | 27,5 | 2,3 | 4,5 |

## TABLEAU 7

| Exemple | Traitement après broyage | | | | % Fibres totales | % Fibres insolubles | % Fibres solubles |
|---|---|---|---|---|---|---|---|
| Réf. 4 | Néant | | | | 50,4 | 42,3 | 8,1 |
| | Cisaillement - extrusion | | | | | | |
| | % eau ajoutée | Temp. ( °C) | Tours/ mn | E (kWh/t) | | | |
| 4a | 17,5 | 100 | 250 | 232 | 52,2 | 41,4 | 10,8 |
| 4b | 8,7 | 100 | 250 | 301 | 51,2 | 38,3 | 12,9 |
| 4c | 11,3 | 100 | 240 | 316 | 51,4 | 37,5 | 13,9 |
| 4d | 6,1 | 100 | 240 | 386 | 46,7 | 30,7 | 16 |

EP 0 358 554 B1

EP 0 358 554 B1

TABLEAU 8

| Traitement de l'Exemple | Réf. 4 | 4a | 4b | 4c | 4d |
|---|---|---|---|---|---|
| Rhamnose | - | - | - | - | - |
| Arabinose | 15,7 | 14,7 | 16,3 | 16,8 | 16,2 |
| Xylose | 26,8 | 26 | 38,2 | 40,8 | 48,7 |
| Mannose | 14,5 | 12,7 | 6,9 | 6,7 | 4 |
| Galactose | 4,4 | 4 | 3,9 | 3,7 | 3,1 |
| Glucose | 15 | 15,1 | 19,1 | 19,1 | 19,7 |
| Acides uroniques | 3,9 | 1,6 | 2 | 1,9 | 1,9 |
| Total | 80,3 | 74,1 | 86,4 | 89 | 93,6 |

TABLEAU 9

| Traitement de l'Exemple | Réf. 4 | Réf. 4 | 4a | 4b | 4c | 4d |
|---|---|---|---|---|---|---|
| | | + extraction aqueuse | | | | |
| Rhamnose | - | - | - | - | - | - |
| Arabinose | 9,6 | 9 | 8,6 | 7,4 | 8,2 | 7,1 |
| Xylose | 16,5 | 16,2 | 16,6 | 13,4 | 14,7 | 13,2 |
| Mannose | 1,3 | 0 | 0 | 0,3 | 0,3 | 0,4 |
| Galactose | 1,2 | 0,8 | 0,8 | 1 | 0,7 | 0,7 |
| Glucose | 19,6 | 23,2 | 19,3 | 15 | 18,9 | 16,5 |
| Acides uroniques | 6,6 | 5 | 4,9 | 4,3 | 4 | 3,6 |
| Total | 54,8 | 54,2 | 50,2 | 41,4 | 46,8 | 41,5 |

EXEMPLE DE REFERENCE 5 et EXEMPLES 5a à 5c

TRAITEMENT DES FIBRES DE BETTERAVE

On utilise des fibres de betteraves commerciales de granulométrie inférieure ou égale à 2 mm et dont la teneur en matières sèches est de 87,3% en poids. Ce produit est le produit conforme à l'Exemple de référence 5.

On conduit ensuite le traitement de cisaillement-extrusion de l'invention en procédant de la même façon que dans le cas des marcs de pomme (Exemple 1).

Si l'on se rapporte au Tableau 10, on constate que le traitement de cisaillement-extrusion induit une solubilisation de 37,7 à 50,2% du poids des fibres de betterave. Le taux d'hydrosolubilité de l'Exemple de référence 5 est très faible. Le traitement de cisaillement-extrusion permet d'augmenter la fraction soluble d'un facteur de 7 à 10.

Les matières solubles sont fortement enrichies en oses neutres et en acides galacturoniques. Le Tableau 11 indique la composition glucidique (% en poids) des fractions solubles lyophilisées.

Les résultats montrent une solubilisation importante des acides galacturoniques, de l'arabinose et, dans une moindre mesure, du galactose.

18

TABLEAU 10

| Exemple | Traitement après broyage | | | | Insolubles dans l'eau (%) | Solubles dans l'eau | | |
|---|---|---|---|---|---|---|---|---|
| | | | | | | (%) | %AAG | %ON |
| Réf. 5 | Néant | | | | 94,9 | 5,1 | 0,2 | 1,7 |
| | Cisaillement - extrusion | | | | | | | |
| | % eau ajoutée | contre-filet | Tours/mn | E (kWh/t) | | | | |
| 5a | 30 | 4 | 240 | 293 | 49,8 | 50,2 | 16,3 | 20,7 |
| 5b | 48 | 4 | 240 | 234 | 60,3 | 37,7 | 15,2 | 11,3 |
| 5c | 48 | 3 | 240 | 239 | 60,5 | 39,5 | 15,4 | 9,4 |

TABLEAU 11

| Traitement de l'Exemple | Réf. 5 | 5a | 5b | 5c |
|---|---|---|---|---|
| | | | | |
| Rhamnose | 0 | 1,9 | 1,4 | 1 |
| Arabinose | 1,8 | 27,9 | 18,2 | 15,2 |
| Xylose | 0 | 0 | 0 | 0 |
| Mannose | 4,3 | 1,2 | 1,3 | 1 |
| Galactose | 0 | 6,3 | 4,6 | 3,3 |
| Glucose | 26,9 | 4 | 4,6 | 3,4 |
| Acides | 4,5 | 32,5 | 40,3 | 39,1 |
| uroniques | | | | |
| Total | 37,5 | 71,9 | 69 | 62 |

**Revendications**
**Revendications pour les Etats contractants suivants : AT, BE, CH, DE, FR, GB, LI, IT, LU, NL, SE**

1. Produit riche en parois végétales, modifie par une opération de cisaillement-extrusion pour renfermer une fraction de polysaccharides hydrosolubles supérieure à celle existant naturellement, sans modification de la composition chimique globale dudit produit, la teneur dudit produit en fraction de polysaccharides hydrosolubles étant au moins égale à 1,5 fois celle qui est présente dans le produit naturel dont est issu ledit produit.

2. Produit modifié selon la revendication 1, caractérisé par le fait que sa teneur en fraction de polysaccharides hydrosolubles est au moins égale au double de cette teneur dans le produit naturel.

3. Produit modifié selon l'une des revendications 1 et 2, caractérisé par le fait qu'il est issu de végétaux supérieurs naturellement riches en pectines, comme les marcs de pomme les écorces d'agrumes et les pulpes de betterave, d'algues, de son de blé de pulpe de pomme de terre, de coque ou de résidus d'huilerie.

**4.** Produit modifié selon l'une des revendications 1 à 3, caractérisé par le fait qu'il se présente sous la forme d'agrégats de dimensions réduites, tels que pastilles, granules et similaires.

**5.** Produit modifié selon l'une des revendications 1 à 3, caractérisé par le fait qu'il se présente sous une forme pulvérulente.

**6.** Produit modifié selon l'une des revendications 1 à 5, caractérisé par le fait qu'il présente une teneur en eau au plus égale à 12% en poids sur une base humide.

**7.** Procédé de fabrication du produit tel que défini à l'une des revendications 1 à 6, caractérisé par le fait qu'on utilise un produit de départ riche en parois végétales à l'état divisé, qu'on ajoute de l'eau, si nécessaire, audit produit à l'état divisé, pour obtenir un mélange apte à subir le traitement de cisaillement ultérieur, et qu'on soumet le produit éventuellement additionné d'eau à un effort de cisaillement avant extrusion, pour obtenir les produits recherchés sous forme d'agrégats de dimensions réduites, lesquels sont, le cas échéant, soumis à un broyage pour obtenir le produit recherché sous une forme pulvérulente.

**8.** Procédé selon la revendication 7, caractérisé par le fait qu'on utilise un produit de départ ayant une teneur en matières sèches d'au moins 70% en poids sur une base humide.

**9.** Procédé selon l'une des revendications 7 et 8, caractérisé par le fait qu'on utilise un produit de départ présentant une granulométrie de l'ordre du millimètre.

**10.** Procédé selon l'une des revendications 7 à 9, caractérisé par le fait qu'on ajoute de l'eau au produit de départ, à raison de 10 à 30% en poids par rapport au produit tel quel.

**11.** Procédé selon l'une des revendications 7 à 10, caractérisé par le fait qu'on applique un gradient de cisaillement compris entre 100 et 800 s$^{-1}$.

**12.** Procédé selon l'une des revendications 7 à 11, caractérisé par le fait qu'on règle le fraction hydrosoluble du produit que l'on veut obtenir en faisant varier l'énergie délivrée au produit en cours de cisaillement.

**13.** Utilisation des produits qui sont tels que définis à l'une des revendications 1 à 6, ou qui sont obtenus par le procédé tel que défini à l'une des revendications 7 à 12, comme fibres alimentaires, en industrie alimentaire, pharmaceutique et diététique.

**14.** Compositions alimentaires, pharmaceutiques et diététiques, caractérisées par le fait qu'elles renferment des fibres alimentaires qui sont constituées par les produits tels que définis à l'une des revendications 1 à 6, ou qui sont obtenus par le procédé tel que défini à l'une des revendications 7 à 12.

**Revendications pour l'Etat contractant suivant : ES**

**1.** Procédé de fabrication d'un produit riche en parois végétales, modifié par une opération de cisaillement -extrusion pour renfermer une fraction de polysaccharides hydrosolubles supérieure à celle existant naturellement, sans modification de la composition chimique globale dudit produit , la teneur dudit produit en fraction de polysaccharides hydrosolubles étant au moins égale à 1,5 fois celle qui est présente dans le produit naturel dont est issu ledit produit , caractérisé par le fait qu'on utilise un produit de départ riche en parois végétales à l'état divisé, qu'on ajoute de l'eau , si nécessaire, audit produit à l'état divisé, pour obtenir un mélange apte à subir le traitement de cisaillement ultérieur, et qu'on soumet le produit éventuellement additionné d'eau à un effort de cisaillement avant extrusion, pour obtenir les produits recherchés sous forme d'agrégats de dimensions réduites, lesquels sont , le cas échéant, soumis à un broyage pour obtenir le produit recherché sous une forme pulvérulente .

**2.** Procédé selon la revendication 1, caractérisé par le fait qu'on utilise un produit de départ ayant une teneur en matières sèches d'au moins 70% en poids sur une base humide.

3. Procédé selon l'une des revendications 1 et 2 , caractérisé par le fait qu'on utilise un produit de départ présentant une granulométrie de l'ordre du millimètre .

4. Procédé selon l'une des revendications 1 à 3, caractérisé par le fait qu'on ajoute de l'eau au produit de départ , à raison de 10 à 30 % en poids par rapport au produit tel quel .

5. Procédé selon l'une des revendications 1 à 4,caractérisé par le fait qu'on applique un gradient de cisaillement compris entre 100 et 800 s$^{-1}$.

6. Procédé selon l'une des revendications 1 à 5, caractérisé par le fait qu'on règle la fraction hydrosoluble du produit que l'on veut obtenir en faisant varier l'énergie délivrée au produit en cours de cisaillement .

7. Procédé selon l'une des revendications 1 à 6, caractérisé par le fait que la teneur en fraction de polysaccharides hydrosolubles du produit est au moins égale au double de cette teneur dans le produit naturel .

8. Procédé selon l'une des revendications 1 à 7, caractérisé par le fait que le produit est issu de végétaux supérieurs naturellement riches en pectines, comme les marcs de pomme, les écorces d'agrumes et les pulpes de betterave, d'algues, de son , de blé, de pulpe de pomme de terre, de coque ou de résidus d'huilerie .

9. Procédé selon l'une des revendications 1 à 8, caractérisé par le fait que le produit se présente sous la forme d'agrégats de dimensions réduites, tels que pastilles, granules et similaires .

10. Procédé selon l'une des revendications 1 à 9 , caractérisé par le fait que le produit se présente sous une forme pulvérulente.

11. Procédé selon l'une des revendications 1 à 10 , caractérisé par le fait que le produit présente une teneur en eau au plus égale à 12 % en poids sur une base humide.

12. Utilisation des produits obtenus par le procédé tel que défini à l'une des revendications 1 à 11 , comme fibres alimentaires, en industrie alimentaire, pharmaceutique et diététique .

13. Compositions alimentaires, et diététiques, caractérisées par le fait qu'elles renferment des fibres alimentaires qui sont constituées par les produits obtenus par le procédé tel que défini à l'une des revendications 1 à 11.

14. Procédé d'obtention de compositions pharmaceutiques , caractérisé par le fait que l'on additionne des fibres alimentaires constituées par les produits obtenus par le procédé tel que défini à l'une des revendications 1 à 11.

**Revendications pour l'Etat contractant suivant : GR**

1. Produit riche en parois végétales, modifié par une opération de cisaillement-extrusion pour renfermer une fraction de polysaccharides hydrosolubles supérieure à celle existant naturellement, sans modification de la composition chimique globale dudit produit , la teneur dudit produit en fraction de polysaccharides hydrosolubles étant au moins égale à 1,5 fois celle qui est présente dans le produit naturel dont est issu ledit produit.

2. Produit modifié selon la revendication 1, caractérisé par le fait que sa teneur en fraction de polysaccharides hydrosolubles est au moins égale au double de cette teneur dans le produit naturel .

3. Produit modifié selon l'une des revendications 1 et 2 , caractérisé par le fait qu'il est issu de végétaux supérieurs naturellement riches en pectines, comme les marcs de pomme , les écorces d'agrumes et les pulpes de betterave, d'algues, de son de blé , de pulpe de pomme de terre, de coque ou de résidus d'huilerie .

**4.** Produit modifié selon l'une des revendications 1 à 3 , caractérisé par le fait qu'il se présente sous la forme d'agrégats de dimensions réduites, tels que pastilles, granules et similaires.

**5.** Produit modifié selon l'une des revendications 1 à 3 , caractérisé par le fait qu'il se présente sous une forme pulvérulente .

**6.** Produit modifié selon l'une des revendications 1 à 5 , caractérisé par le fait qu'il présente une teneur en eau au plus égale à 12 % en poids sur une base humide .

**7.** Procédé de fabrication du produit tel que défini à l'une des revendications 1 à 6 , caractérisé par le fait qu'on utilise un produit de départ riche en parois végétales à l'état divisé, qu'on ajoute de l'eau, si nécessaire , audit produit à l'état divisé, pour obtenir un mélange apte à subir le traitement de cisaillement ultérieur , et qu'on soumet le produit éventuellement additionné d'eau à un effort de cisaillement avant extrusion, pour obtenir les produits recherchés sous forme d'agrégats de dimensions réduites, lesquels sont , le cas échéant , soumis à un broyage pour obtenir le produit recherché sous une forme pulvérulente .

**8.** Procédé selon la revendication 7, caractérisé par le fait qu'on utilise un produit de départ ayant une teneur en matières sèches d'au moins 70 % en poids sur une base humide .

**9.** Procédé selon l'une des revendications 7 et 8, caractérisé par le fait qu'on utilise un produit de départ présentant une granulométrie de l'ordre du millimètre .

**10.** Procédé selon l'une des revendications 7 à 9 , caractérisé par le fait qu'on ajoute de l'eau au produit de départ, à raison de 10 à 30 % en poids par rapport au produit tel quel .

**11.** Procédé selon l'une des revendications 7 à 10, caractérisé par le fait qu'on applique un gradient de cisaillement compris entre 100 et 800 $s^{-1}$.

**12.** Procédé selon l'une des revendications 7 à 11 , caractérisé par le fait qu'on règle la fraction hydrosoluble du produit que l'on veut obtenir en faisant varier l'énergie délivrée au produit en cours de cisaillement .

**13.** Utilisation des produits qui sont tels que définis à l'une des revendications 1 à 6 , ou qui sont obtenus par le procédé tel que défini à l'une des revendications 7 à 12 , comme fibres alimentaires, en industrie alimentaire, pharmaceutique et diététique .

**14.** Compositions alimentaires , et diététiques, caractérisées par le fait qu'elles renferment des fibres alimentaires qui sont constituées par les produits tels que définis à l'une des revendications 1 à 6 , ou qui sont obtenus par le procédé tel que défini à l'une des revendications 7 à 12.

**15.** Procédé d'obtention de compositions pharmaceutiques, caractérisé par le fait que l'on additionne des fibres alimentaires constituées par les produits tels que définis à l'une des revendications 1 à 6 , ou obtenus par le procédé tel que défini à l'une des revendications 7 à 12.

**Claims**
**Claims for the following Contracting States : AT, BE, CH, DE, FR, GB, IT, LI, LU, NL, SE**

**1.** A plant wall-rich product modified by a shearing-extrusion treatment to contain a water-soluble polysaccharide fraction higher than that existing naturally, without alteration of the overall chemical composition of the said product, the water-soluble polysaccharide fraction content of the said product heing at least equal to 1.5 times that which is present in the natural product from which the said product originates.

**2.** The modified product as claimed in claim 1, characterized in that its water-soluble polysaccharide fraction content is at least equal to twice that content in the natural product.

3. The modified product as claimed in either of claims 1 and 2, characterized in that it originates from naturally pectin-rich higher plants such as apple marcs, citrus peelings and beet pulps, algae, wheat bran, potato pulp, shell or oil works residues.

4. The modified product as claimed in one of claims 1 to 3, characterized in that it is in the form of small-sized aggregates such as tablets, granules and the like.

5. The modified product as claimed in one of claims 1 to 3, characterized in that it is in a pulverulent form.

6. The modified product as claimed in one of claims 1 to 5, characterized in that it has a water content not exceeding 12% by weight on a wet basis.

7. A process for the manufacture of the product such as defined in one of claims 1 to 6, characterized in that a plant wall-rich starting material is employed in the divided state, water is added, if necessary, to the said product in the divided state, to obtain a mixture capable of undergoing the subsequent shearing treatment, and the product, to which water is optionally added, is subjected to a shearing force before extrusion, to obtain the required products in the form of small-sized aggregates which are, if appropriate, subjected to a grinding operation to obtain the required product in a pulverulent form.

8. The process as claimed in claim 7, characterized in that a starting material which has a solids content of at least 70% by weight on a wet basis is employed.

9. The process as claimed in either of claims 7 and 8, characterized in that a starting material which has a particle size of the order of a millimeter is employed.

10. The process as claimed in one of claims 7 to 9, characterized in that water is added to the starting material in a proportion of 10 to 30% by weight relative to the material as such.

11. The process as claimed in one of claims 7 to 10, characterized in that a shear gradient of between 100 and 800 $s^{-1}$ is applied.

12. The process as claimed in one of claims 7 to 11, characterized in that the water-soluble fraction of the product which it is desired to obtain is controlled by varying the energy delivered to the product during shearing.

13. Use of the products which are such as defined in one of claims 1 to 6 or which are obtained by the process such as defined in one of claims 7 to 12, as alimentary fibers, in alimentary, pharmaceutical and dietetic industry.

14. Alimentary, pharmaceutical and dietetic compositions characterized in that they contain alimentary fibers consisting of the products such as defined in one of claims 1 to 6, or which are obtained by the process such as defined in one of claims 7 to 12.

**Claims for the following Contracting State : ES**

1. A process for the manufacture of a plant wall-rich product modified by a shearing-extrusion treatment to contain a water-soluble polysaccharide fraction higher than that existing naturally, without alteration of the overall chemical composition of the said product, the water-soluble polysaccharide fraction content of the said product being at least equal to 1.5 times that which is present in the natural product from which the said product originates, characterized in that a plant wall-rich starting material is employed in the divided state, water is added, if necessary, to the said product in the divided state, to obtain a mixture capable of undergoing the subsequent shearing treatment, and the product, to which water is optionally added, is subjected to a shearing force before extrusion, to obtain the required products in the form of small-sized aggregates which are, if appropriate, subjected to a grinding operation to obtain the required product in a pulverulent form.

23

2. The process as claimed in claim 1, characterized in that a starting material which has a solids content of at least 7O% by weight on a wet basis is employed.

3. The process as claimed in either of claims 1 and 2, characterized in that a starting material which has a particle size of the order of a millimeter is employed.

4. The process as claimed in one of claims 1 to 3, characterized in that water is added to the starting material in a proportion of 10 to 30% by weight relative to the material as such.

5. The process as claimed in one of claims 1 to 4, characterized in that a shear gradient of between 100 and 800 $s^{-1}$ is applied.

6. The process as claimed in one of claims 1 to 5, characterized in that the water-soluble fraction of the product which it is desired to obtain is controlled by varying the energy delivered to the product during shearing.

7. The process as claimed in one of claims 1 to 6, characterized in that the water-soluble polysaccharide fraction content of the product is at least equal to twice that content in the natural product.

8. The process as claimed in one of claims 1 and 7, characterized in that the product originates from naturally pectin-rich higher plants such as apple marcs, citrus peelings and beet pulps, algae, wheat bran, potato pulp, shell or oil works residues.

9. The process as claimed in one of claims 1 to 8, characterized in that the product is in the form of small-sized aggregates such as tablets, granules and the like.

10. The process as claimed in one of claims 1 to 9, characterized in that the product is in a pulverulent form.

11. The process as claimed in one of claims 1 to 10, characterized in that the product has a water content not exceeding 12% by weight on a wet basis.

12. Use of the products which are obtained by the process such as defined in one of claims 1 to 11, as alimentary fibers, in alimentary, pharmaceutical and dietetic industry.

13. Alimentary and dietetic compositions characterized in that they contain alimentary fibers consisting of the products which are obtained by the process such as defined in one of claims 1 to 11.

14. A process for the manufacture of pharmaceutical compositions, characterized in that alimentary fibers consisting of the products which are obtained by the process such as defined in one of claims 7 to 11 are added.

**Claims for the following Contracting State : GR**

1. A plant wall-rich product modified by a shearing-extrusion treatment to contain a water-soluble polysaccharide fraction higher than that existing naturally, without alteration of the overall chemical composition of the said product, the water-soluble polysaccharide fraction content of the said product being at least equal to 1.5 times that which is present in the natural product from which the said product originates.

2. The modified product as claimed in claim 1, characterized in that its water-soluble polysaccharide fraction content is at least equal to twice that content in the natural product.

3. The modified product as claimed in either of claims 1 and 2, characterized in that it originates from naturally pectin-rich higher plants such as apple marcs, citrus peelings and beet pulps, algae, wheat bran, potato pulp, shell or oil works residues.

EP 0 358 554 B1

**4.** The modified product as claimed in one of claims 1 to 3, characterized in that it is in the form of small-sized aggregates such as tablets, granules and the like.

**5.** The modified product as claimed in one of claims 1 to 3, characterized in that it is in a pulverulent form.

**6.** The modified product as claimed in one of claims 1 to 5, characterized in that it has a water content not exceeding 12% by weight on a wet basis.

**7.** A process for the manufacture of the product such as defined in one of claims 1 to 6, characterized in that a plant wall-rich starting material is employed in the divided state, water is added, if necessary, to the said product in the divided state, to obtain a mixture capable of undergoing the subsequent shearing treatment, and the product, to which water is optionally added, is subjected to a shearing force before extrusion, to obtain the required products in the form of small-sized aggregates which are, if appropriate, subjected to a grinding operation to obtain the required product in a pulverulent form.

**8.** The process as claimed in claim 7, characterized in that a starting material which has a solids content of at least 7O% by weight on a wet basis is employed.

**9.** The process as claimed in either of claims 7 and 8, characterized in that a starting material which has a particle size of the order of a millimeter is employed.

**10.** The process as claimed in one of claims 7 to 9, characterized in that water is added to the starting material in a proportion of 10 to 30% by weight relative to the material as such.

**11.** The process as claimed in one of claims 7 to 10, characterized in that a shear gradient of between 100 and 800 $s^{-1}$ is applied.

**12.** The process as claimed in one of claims 7 to 11, characterized in that the water-soluble fraction of the product which it is desired to obtain is controlled by varying the energy delivered to the product during shearing.

**13.** Use of the products which are such as defined in one of claims 1 to 6 or which are obtained by the process such as defined in one of claims 7 to 12, as alimentary fibers, in alimentary, pharmaceutical and dietetic industry.

**14.** Alimentary and dietetic compositions characterized in that they contain alimentary fibers consisting of the products such as defined in one of claims 1 to 6, or which are obtained by the process such as defined in one of claims 7 to 12.

**15.** A process for the manufacture of pharmaceutical compositions, characterized in that alimentary fibers consisting of the products such as defined in one of claims 1 to 6 or which are obtained by the process such as defined in one of claims 7 to 12 are added.

**Patentansprüche**
**Patentansprüche für folgende Vertragsstaaten : AT, BE, CH, DE, FR, GB, LI, IT, LU, NL, SE**

**1.** An pflanzlichen Zellwänden reiches Produkt, das durch ein Scher-Extrusionsverfahren modifiziert wird, um eine Fraktion von wasserlöslichen Polysacchariden zu umfassen, die größer als die natürlich vorkommende ist, ohne Veränderung der allgemeinen chemischen Zusammensetzung des genannten Produkts, wobei der Gehalt des genannten Produkts an wasserlöslicher Polysaccharid-Fraktion wenigstens gleich dem 1,5-fachen derjenigen ist, die in dem natürlichen Produkt, aus dem das genannte Produkt gebildet wird, vorhanden ist.

**2.** Modifiziertes Produkt nach Anspruch 1, dadurch gekennzeichnet, daß sein Gehalt an wasserlöslicher Polysaccharid-Fraktion wenigstens gleich dem doppelten dieses Gehalts im natürlichen Produkt ist.

25

**3.** Modifiziertes Produkt nach einem der Ansprüche 1 oder 2, dadurch gekennzeichnet, daß es von höheren Pflanzen stammt, die von Natur aus reich an Pectinen sind wie Apfeltrester, schalen von Zitrusfrüchten und Zuckerrübenschnitzel, Algen, Weizenkleie, Kartoffelschnitzel, Schalen oder Rückstände aus Ölmühlen.

**4.** Modifiziertes Produkt nach einem der Ansprüche 1 bis 3, dadurch gekennzeichnet, daß es in Form von Aggregaten von verminderter Größe wie Pastillen, Granulaten oder ähnlichem vorliegt.

**5.** Modifiziertes Produkt nach einem der Ansprüche 1 bis 3, dadurch gekennzeichnet, daß es in pulveriger Form vorliegt.

**6.** Modifiziertes Produkt nach einem der Ansprüche 1 bis 3, dadurch gekennzeichnet, daß es einen Wassergehalt von höchstens 12 Gew.-% bezogen auf Feuchtebasis aufweist.

**7.** Verfahren zur Herstellung eines Produktes nach einem der Ansprüche 1 bis 6, dadurch gekennzeichnet, daß man ein Ausgangsprodukt verwendet, das reich an zerkleinerten Zellwänden ist, falls notwenig dem zerkleinerten Produkt Wasser hinzufügt, um eine Mischung zu erhalten, die einer nachträglichen Scherbehandlung unterworfen werden kann und daß man das eventuell mit Wasser versetzte Produkt einer Scherbehandlung vor der Extrusion unterwirft, um die gewünschten Produkte in Form von Aggregaten von verminderter Größe zu erhalten, welche gegebenenfalls einem Zermahlen unterworfen werden, um das gewünschte Produkt in Pulverform zu erhalten.

**8.** Verfahren nach Anspruch 7, dadurch gekennzeichnet, daß man ein Ausgangsprodukt verwendet, das einen Trockensubstanzgehalt von wenigstens 70 Gew.-% bezogen auf die Feuchtebasis hat.

**9.** Verfahren nach einem der Ansprüche 7 und 8, dadurch gekennzeichnet, daß man ein Ausgangsprodukt verwendet, das eine Korngröße im Millimeterbereich aufweist.

**10.** Verfahren nach einem der Ansprüche 7 bis 9, dadurch gekennzeichnet, daß man 10 bis 30 Gew.-% Wasser zum Ausgangsprodukt in bezug auf das unveränderte Produkt hinzufügt.

**11.** Verfahren nach einem der Ansprüche 7 bis 10, dadurch gekennzeichnet, daß man einen Schergradienten von 100 bis 800 s$^{-1}$anwendet.

**12.** Verfahren nach einem der Ansprüche 7 bis 11, dadurch gekennzeichnet, daß man die wasserlösliche Fraktion des Produkts, das man erhalten will, durch Veränderung der dem Produkt zugeführten Energie im Laufe des Scherens regelt.

**13.** Verwendung der Produkte gemäß einem der Ansprüche 1 bis 6 oder die durch das Verfahren gemäß einem der Ansprüche 7 bis 12 erhalten wurden, als Nahrungsmittelfasern, in der Nahrungsmittel-, pharmazeutischen- und diätetischen Industrie.

**14.** Nahrungsmittel-, pharmazeutische und diätetische Zusammensetzungen, dadurch gekennzeichnet, daß sie Nahrungsmittelfasern umfassen, die aus Produkten bestehen, welche gemäß den Ansprüchen 1 bis 6 definiert sind oder durch das Verfahren gemäß einem der Ansprüche 7 bis 12 erhalten werden.

**Patentansprüche für folgenden Vertragsstaat : ES**

**1.** Verfahren zur Herstellung eines an pflanzlichen Zellwänden reichen Produkts, das durch ein Scher-Extrusionsverfahren modifiziert wird, um eine Fraktion von wasserlöslichen Polysacchariden zu umfassen, die größer als die natürlich vorkommende ist, ohne Veränderung der allgemeinen chemischen Zusammensetzung des genannten Produkts, wobei der Gehalt des genannten Produkts an wasserlöslicher Polysaccharid-Fraktion wenigstens gleich dem 1,5-fachen derjenigen ist, die in dem natürlichen Produkt, aus dem das genannte Produkt gebildet wird, vorhanden ist, dadurch gekennzeichnet, daß man ein Ausgangsprodukt verwendet, das reich an zerkleinerten Zellwänden ist, falls notwenig dem zerkleinerten Produkt Wasser hinzufügt, um eine Mischung zu erhalten, die einer nachträglichen Scherbehandlung unterworfen werden kann und daß man das eventuell mit Wasser versetzte Produkt einer Scherbehandlung vor der Extrusion unterwirft, um die gewünschten Produkte in Form von Aggegaten von verminderter Größe zu erhalten, welche gegebenenfalls einem Zermahlen unterworfen werden, um das gewünschte Produkt in Pulverform zu erhalten.

2. Verfahren nach Anspruch 1, dadurch gekennzeichnet, daß man ein Ausgangsprodukt verwendet, das einen Trockensubstanzgehalt von wenigstens 70 Gew.-% bezogen auf die Feuchtebasis hat.

3. Verfahren nach einem der Ansprüche 1 und 2, dadurch gekennzeichnet, daß man ein Ausgangsprodukt verwendet, das eine Korngröße im Millimeterbereich aufweist.

4. Verfahren nach einem der Ansprüche 1 bis 3, dadurch gekennzeichnet, daß man 10 bis 30 Gew.-% Wasser zum Ausgangsprodukt in bezug auf das unveränderte Produkt hinzufügt.

5. Verfahren nach einem der Ansprüche 1 bis 4, dadurch gekennzeichnet, daß man einen Schergradienten von 100 bis 800 $s^{-1}$ anwendet.

6. Verfahren nach einem der Ansprüche 1 bis 5, dadurch gekennzeichnet, daß man die wasserlösliche Fraktion des Produkts, das man erhalten will, durch Veränderung der dem Produkt zugeführten Energie im Laufe des Scherens regelt.

7. Verfahren nach einem der Ansprüche 1 bis 6, dadurch gekennzeichent, daß der Gehalt an der wasserlöslichen Polysaccharid-Fraktion des Produkts wenigstens gleich dem doppelten dieses Gehalts im natürlichen Produkt ist.

8. Verfahren nach einem der Ansprüche 1 bis 7, dadurch gekennzeichnet, daß das Ausgangsprodukt von höheren Pflanzen stammt, die von Natur aus reich an Pectinen sind wie Apfeltrester, Schalen von Zitrusfrüchten und Zuckerrübenschnitzel, Algen, Kleie, Weizen, Kartoffelschnitzel, Schalen oder Rückstände aus Ölmühlen.

9. Verfahren nach einem der Ansprüche 1 bis 8, dadurch gekennzeichnet, daß das Produkt in Form von Aggregaten von verminderter Größe wie Pastillen, Granulaten oder ähnlichem erhalten wird.

10. Verfahren nach einem der Ansprüche 1 bis 9, dadurch gekennzeichnet, daß das Produkt in pulveriger Form erhalten wird.

11. Verfahren nach einem der Ansprüche 1 bis 10, dadurch gekennzeichnet, daß das Produkt einen Wassergehalt von höchstens 12 Gew.-% bezogen auf Feuchtebasis aufweist.

12. Verwendung der nach dem Verfahren gemäß einem der Ansprüche 1 bis 11 erhaltenen Produkte als Nahrungsmittelfasern, in der Nahrungsmittel-, Pharmazeutischen- und diätetischen Industrie.

13. Nahrungsmittel- und diätetische Zusammensetzungen, dadurch gekennzeichnet, daß sie Nahrungsmittelfasern umfassen, die aus Produkten bestehen, welche gemäß dem Verfahren nach einem der Ansprüche 1 bis 11 definiert sind.

14. Verfahren zur Herstellung von Pharmazeutischen Zusammensetzungen, dadurch gekennzeichnet, daß man Nahrungsmittelfasern hinzufügt, die aus den Produkten zusammengesetzt sind, die nach dem Verfahren gemäß einem der Ansprüche 1 bis 11 definiert sind.

**Patentansprüche für folgenden Vertragsstaat : GR**

1. An pflanzlichen Zellwänden reiches Produkt, das durch ein Scher-Extrusionsverfahren modifiziert wird, um eine Fraktion von wasserlöslichen Polysacchariden zu umfassen, die größer als die natürlich vorkommende ist, ohne Veränderung der allgemeinen chemischen Zusammensetzung des genannten Produkts, wobei der Gehalt des genannten Produkts an wasserlöslicher Polysaccharid-Fraktion wenigstens gleich dem 1,5-fachen derjenigen ist, die in dem natürlichen Produkt, aus dem das genannte Produkt gebildet wird, vorhanden ist.

EP 0 358 554 B1

**2.** Modifiziertes Produkt nach Anspruch 1, dadurch gekennzeichnet, daß der Gehalt an der wasserlöslicher Polysaccharid-Fraktion wenigstens gleich dem doppelten dieses Gehalts im natürlichen Produkt ist.

**3.** Modifiziertes Produkt nach einem der Ansprüche 1 oder 2, dadurch gekennzeichnet, daß es von höheren Pflanzen stammt, die von Natur aus reich an Pectinen sind wie Apfeltrester, Schalen von Zitrusfrüchten und Zuckerrübenschnitzel, Algen, Weizenkleie, Kartoffelschnitzel, Schalen oder Rückstände aus Ölmühlen.

**4.** Modifiziertes Produkt nach einem der Ansprüche 1 bis 3, dadurch gekennzeichnet, daß es in Form von Aggregaten von verminderter Größe wie Pastillen, Granulaten oder ähnlichem vorliegt.

**5.** Modifiziertes Produkt nach einem der Ansprüche 1 bis 3, dadurch gekennzeichnet, daß es in pulveriger Form vorliegt.

**6.** Modifiziertes Produkt nach einem der Ansprüche 1 bis 5 , dadurch gekennzeichnet, daß es einen Wassergehalt von höchstens 12 Gew.-% bezogen auf Feuchtebasis aufweist.

**7.** Verfahren zur Herstellung des Produktes nach einem der Ansprüche 1 bis 6, dadurch gekennzeichnet, daß man ein Ausgangsprodukt verwendet, das reich an zerkleinerten Zellwänden ist, falls notwenig dem zerkleinerten Produkt Wasser hinzufügt, um eine Mischung zu erhalten, die einer nachträglichen Scherbehandlung unterworfen werden kann und daß man das eventuell mit Wasser versetzte Produkt einer Scherbehandlung vor der Extrusion unterwirft, um die gewünschten Produkte in Form von Aggegaten von verminderter Größe zu erhalten, welche gegebenenfalls einem Zermahlen unterworfen werden, um das gewünschte Produkt in Pulverform zu erhalten.

**8.** Verfahren nach Anspruch 7, dadurch gekennzeichnet, daß man ein Ausgangsprodukt verwendet, das einen Trockensubstanzgehalt von wenigstens 70 Gew.-% bezogen auf die Feuchtebasis hat.

**9.** Verfahren nach einem der Ansprüche 7 und 8, dadurch gekennzeichnet, daß man ein Ausgangsprodukt verwendet, das eine Korngröße im Millimeterbereich aufweist.

**10.** Verfahren nach einem der Ansprüche 7 bis 9, dadurch gekennzeichnet, daS man 10 bis 30 Gew.-% Wasser zum Ausgangsprodukt in bezug auf das unveränderte Produkt hinzufügt.

**11.** Verfahren nach einem der Ansprüche 7 bis 10, dadurch gekennzeichnet, daß man einen Schergradienten von 100 bis 800 s$^{-1}$ anwendet.

**12.** Verfahren nach einem der Ansprüche 7 bis 11, dadurch gekennzeichnet, daß man die wasserlösliche Fraktion des Produkts, das man erhalten will, durch Veränderung der dem Produkt zugeführten Energie im Laufe des Scherens regelt.

**13.** Verwendung der Produkte gemäß einem der Ansprüche 1 bis 6 oder die durch das Verfahren gemäß einem der Ansprüche 7 bis 12 erhalten werden, als Nahrungsmittelfasern, in der Nahrungsmittel-, pharmazeutischen- und diätetischen Industrie.

**14.** Nahrungsmittel- und diätetische Zusammensetzungen, dadurch gekennzeichnet, daß sie Nahrungsmittelfasern umfassen, die aus Produkten bestehen, welche gemäß einem der Ansprüche 1 bis 6 definiert sind oder durch das Verfahren gemäß einem der Ansprüche 7 bis 12 erhalten werden.

**15.** Verfahren zur Herstellung von pharmazeutischen Zusammensetzungen, dadurch gekennzeichnet, daß man Nahrungsmittelfasern hinzufügt, die aus gemäß einem der Ansprüche 1 bis 6 definierten Produkten bestehen oder die nach dem Verfahren gemäß einem der Ansprüche 7 bis 12 erhalten wurden.

28

EP 0 358 554 B1

FIG.1

FIG.2

FIG.3

29